# EUROPÄISCHE PATENTSCHRIFT

(11) **EP 3 031 226 B1**
(45) Veröffentlichungstag und Bekanntmachung des Hinweises auf die Patenterteilung: **28.12.2016**
(21) Anmeldenummer: 14748195.6
(22) Anmeldetag: 04.08.2014
(51) Int. Cl.: H04W 12/04, H04L 9/08, H04L 29/06, G06F 9/445, G06F 21/60

(54) **UNTERSTÜTZUNG DER NUTZUNG EINES GEHEIMEN SCHLÜSSELS**
SUPPORTING THE USE OF A SECRET KEY
ASSISTANCE POUR L'UTILISATION D'UNE CLÉ SECRÈTE

(30) Priorität: 19.08.2013 DE 102013108925
(43) Veröffentlichungstag der Anmeldung: 15.06.2016
(73) Patentinhaber: Deutsche Post AG, 53113 Bonn (DE)
(72) Erfinder: BOBINSKI, Mike, 53113 Bonn (DE); VOUCKO, Michael, 63477 Maintal (DE)
(74) Vertreter: Cohausz & Florack
(86) Internationale Anmeldenummer: PCT/EP2014/066716
(87) Internationale Veröffentlichungsnummer: WO 2015/024763

(56) Entgegenhaltungen:
- US-A1- 2008 260 149
- US-A1- 2011 162 053
- US-A1- 2012 011 578

## Beschreibung

### Gebiet der Erfindung

Die vorliegende Erfindung betrifft unter anderem Verfahren, Vorrichtungen, Systeme, Programme und Speichermedien zum Unterstützen der Nutzung eines geheimen Schlüssels. Der geheime Schlüssel kann dabei beispielsweise ein Schüssel für eine symmetrische Verschlüsselung oder ein privater Schüssel eines Schüsselpaars für eine asymmetrische Verschlüsselung sein.

### Hintergrund der Erfindung

Daten können heutzutage digital, beispielsweise als Email, versendet werden. Dabei eignet sich der herkömmliche Emailversand aus diversen Gründen nicht für vertrauliche Informationen. Zum einen sind weder Absender, noch Empfänger zweifelsfrei identifizierbar. Das bedeutet, dass der Empfänger einer Email nicht sicher sein kann, dass der Absender tatsächlich die Person oder Institution ist, die als Absender angegeben ist. Zum anderen wird die Information offen übertragen, was bedeutet, dass Fehlläufer von dem irrtümlichen Empfänger gelesen werden können. Zusätzlich kann der Provider der Emailfunktion, über dessen Server die Email übertragen wird, die Information aus der Email zur Kenntnis nehmen.

Der Inhalt von elektronischen Nachrichten kann über eine Ende-zu-Ende Verschlüsselung geschützt werden, so dass die Nachricht während des Transports vom Absender zum Empfänger von keinem Dritten gelesen werden kann. Hierbei muss ein Absender eine Nachricht oder einen Teil einer Nachricht kryptografisch verschlüsseln, und der Empfänger muss die Nachricht entschlüsseln. Die Verschlüsselung kann eine symmetrische Verschlüsselung sein; in dem Fall basieren Verschlüsselung und Entschlüsselung auf dem gleichen Schlüssel. Alternativ kann die Verschlüsselung eine asymmetrische Verschlüsselung sein; in dem Fall kann die Verschlüsselung auf einem öffentlichen Schlüssel eines Schlüsselpaars eines Nutzers basieren und die Entschlüsselung auf einem privaten Schlüssel des Schlüsselpaars. Herkömmlicherweise muss der Empfänger seinen Schlüssel oder seine Schlüssel eigenständig verwalten und schützen, letzteres sowohl vor einem Verlust wie auch vor einem unbefugten Auslesen durch Dritte. Zudem muss er dem Absender den zur Verschlüsselung notwendigen Schlüssel zugänglich machen. Außerdem sind auf Empfängerseite die Installation von Softwaremodulen und gegebenenfalls zusätzliche Geräte, wie Kartenlesegeräte, erforderlich.

Ein Trustcenter kann die Schlüsselgenerierung und -verwaltung unterstützen. Insbesondere kann ein Trustcenter Empfängern eine gesicherte Aufbewahrung von Schlüsseln anbieten, um den Verlust eines Schlüssels zu verhindern. Hierzu muss der Empfänger jedoch nicht nur ein Vertragsverhältnis mit einem Email-Provider oder einem anderen Nachrichtenzusteller, sondern zusätzlich noch ein Vertragsverhältnis mit dem Trustcenter eingehen. Ein Absender muss gegebenenfalls Schlüssel für mehrere Empfänger von mehreren Trustcentern abrufen und sicherstellen, dass er den jeweils korrekten Schlüssel des Empfängers bei der Verschlüsselung einer Nachricht verwendet. Ein Trustcenter kann zusätzlich Zertifikate für elektronische Signaturen zur Bescheinigung der Identität eines Kommunikationspartners ausstellen.

In einer Variante kann ein Nachrichtenzusteller als Komplettanbieter für eine sichere Nachrichtenübermittlung auftreten. Die Anmelderin bietet ein solches Verfahren beispielsweise mit dem E-Postbrief an. Sowohl der Empfänger als auch der Absender benötigen dann nur einen Vertrag mit dem Nachrichtenzusteller, und sie erhalten alle notwendigen Funktionen für eine gesicherte Kommunikation bereitgestellt. Ein Trustcenter kann dabei einen Schlüssel für einen Nutzer erstellen, der dann von dem Nachrichtenzusteller verwaltet wird. Ein Absender kann von dem Nachrichtenzusteller die benötigten Schlüssel erhalten und dort auch Nachrichten einliefern. Um keinerlei technischen oder organisatorischen Maßnahmen auf Seiten des Empfängers vorauszusetzen, können die verschlüsselten Nachrichten auf Seiten des Nachrichtenzustellers bei Abruf der Nachricht durch den Empfänger bereits auf einem Server des Nachrichtenzustellers entschlüsselt und dem Empfänger über eine gesicherte Verbindung übertragen werden. Durch hohe Anforderungen an die Identifikation der Teilnehmer und die Bereitstellung eines Adressqualifikations-Dienstes kann der Nachrichtenübermittler für den Absender auch die Empfängeradresse bestimmen oder überprüfen und eine korrekte Zustellung sicherstellen.

US 2012/011578 Offenbart das Erzeugen eine, Identifikators zum Alruf eines geheimen Schlüssels.

### Allgemeine Beschreibung einiger beispielhafter Ausführungsformen der Erfindung

Eine der Aufgaben der Erfindung besteht darin, eine Nutzung eines geheimen Schlüssels auf eine alternative Weise zu bestehenden Ansätzen zu unterstützen. Eine andere Aufgabe der Erfindung besteht darin, eine besonders nutzerfreundliche und gleichzeitig besonders sichere Nutzung eines geheimen Schlüssels zu ermöglichen.

Die Aufgabe wird gelöst durch ein Verfahren gemäß Anspruch 1, eine Vorrichtung gemäß Anspruch 5, ein Programm gemäß Anspruch 7, ein Verfahren gemäß Anspruch 8, eine Vorrichtung gemäß Anspruch 12, ein Programm gemäß Anspruch 14 und ein System gemäß Anspruch 15. Weitere Ausführungsformen sind den abhängigen Ansprüchen zu entnehmen.

Für einen ersten Aspekt wird für eine beispielhafte Ausführungsform eines Verfahrens, ausgeführt von einer Vorrichtung einer ersten Einrichtung, angenommen, dass die erste Einrichtung Schlüsselkennungen mit Zuordnung zu einem jeweiligen Nutzer speichert, und dass eine zweite Einrichtung geheime Schlüssel speichert, die sich jeweils mittels einer Schlüsselkennung auffinden lassen. Das Verfahren umfasst ein Authentifizieren eines Nutzers, der sich über eine Nutzervorrichtung bei der ersten Einrichtung einloggt. Das Verfahren umfasst ferner ein Erzeugen eines temporären Identifikators als Grundlage für einen Abruf eines für den Nutzer in der zweiten Einrichtung bereitgehaltenen geheimen Schlüssels und ein Zuordnen des Identifikators zu dem Nutzer. Das Verfahren umfasst ferner ein Übermitteln des Identifikators an die Nutzervorrichtung. Das Verfahren umfasst ferner ein Empfangen einer Anforderung einer Schlüsselkennung von der zweiten Einrichtung, wobei die Anforderung einen Identifikator enthält, der der zweiten Einrichtung von einer Nutzervorrichtung übermittelt wurde. Das Verfahren umfasst ferner ein Ermitteln eines dem erhaltenen Identifikator zugeordneten Nutzers und ein Bestimmen einer für den ermittelten Nutzer gespeicherten Schlüsselkennung. Das Verfahren umfasst ferner ein Übermitteln der Schlüsselkennung an die zweite Einrichtung.

Für einen zweiten Aspekt wird für eine beispielhafte Ausführungsform eines Verfahrens, ausgeführt von einer Vorrichtung einer zweiten Einrichtung, angenommen, dass die zweite Einrichtung geheime Schlüssel speichert, die sich jeweils mittels einer Schlüsselkennung auffinden lassen, und dass eine erste Einrichtung Schlüsselkennungen mit Zuordnung zu einem jeweiligen Nutzer speichert. Das Verfahren umfasst ein Empfangen einer Anforderung eines geheimen Schlüssels von einer Nutzervorrichtung zusammen mit einem temporären Identifikator. Das Verfahren umfasst ferner ein Anfordern einer Schlüsselkennung von der ersten Einrichtung, wobei der empfangene Identifikator übermittelt wird. Das Verfahren umfasst ferner ein Empfangen einer Schlüsselkennung von der ersten Einrichtung für einen dem Identifikator in der ersten Einrichtung zugeordneten Nutzer. Das Verfahren umfasst ferner ein Ermitteln eines geheimen Schlüssels basierend auf der empfangenen Schlüsselkennung. Das Verfahren umfasst ferner ein Übermitteln des geheimen Schlüssels an die Nutzervorrichtung.

Die Erfindung sieht also für bestimmte beispielhafte Ausführungsformen vor, dass eine erste Einrichtung Schlüsselkennungen mit Zuordnung zu einem jeweiligen Nutzer speichert und dass eine zweite Einrichtung Schlüssel speichert, die sich jeweils mittels einer Schlüsselkennung auffinden lassen. Ein Nutzer kann sich zum Erhalten eines geheimen Schlüssels mittels einer Nutzervorrichtung zunächst bei der ersten Einrichtung einloggen. Das Einloggen könnte speziell zum Erhalten des geheimen Schlüssels erfolgen, aber ebenso primär für einen anderen Zweck, wie dem Abrufen von Daten von der ersten Einrichtung. Die erste Einrichtung authentifiziert den Nutzer, erzeugt einen temporären Identifikator, ordnet den Identifikator intern dem Nutzer zu und übermittelt den Identifikator an die Nutzervorrichtung. Der Nutzer kann durch die erste Einrichtung auf beliebige Weise authentifiziert werden, beispielsweise anhand eines beim Einloggen angegebenen Nutzernamens oder einer angegebenen Nutzeradresse für ein elektronisches Postfach und eines eingegebenen Passworts. Das Erzeugen des Identifikators könnte automatisch nach einer Authentifizierung des Nutzers erfolgen oder erst aufgrund weiterer erfüllter Bedingungen. Dies könnten beispielsweise Bedingungen sein, die zeigen, dass der Nutzer einen geheimen Schlüssel benötigt. Die erfolgte Zuordnung des Identifikators wird zumindest zeitweise in der ersten Einrichtung vorgehalten. Mittels des erhaltenen Identifikators kann die Nutzervorrichtung nun selbst einen geheimen Schlüssel von der zweiten Einrichtung anfordern. Wenn die zweite Einrichtung eine Anforderung eines geheimen Schlüssels von der Nutzervorrichtung zusammen mit einem Identifikator empfängt, fordert sie eine Schlüsselkennung von der ersten Einrichtung an, wobei der empfangene Identifikator übermittelt wird. Die erste Einrichtung ermittelt einen dem erhaltenen Identifikator zugeordneten Nutzer, bestimmt eine für den ermittelten Nutzer gespeicherte Schlüsselkennung und übermittelt die Schlüsselkennung an die zweite Einrichtung. Diese ermittelt einen geheimen Schlüssel basierend auf der empfangenen Schlüsselkennung und übermittelt den geheimen Schlüssel direkt an die Nutzervorrichtung. Nach Erhalt des geheimen Schlüssels kann die Nutzervorrichtung den Schlüssel beispielsweise für eine Entschlüsselung von verschlüsselten Daten oder - im Fall eines Schlüssels für eine symmetrische Verschlüsselung - auch für eine Verschlüsselung von Daten nutzen.

Ein möglicher Vorteil der Erfindung liegt darin, dass der Nutzer selbst keinen geheimen Schlüssel in der Nutzervorrichtung vorrätig halten muss. Dadurch braucht der Nutzer nicht dafür Sorge zu tragen, dass der geheime Schlüssel sicher vor dem Zugriff anderer verwahrt ist und dass er nicht verlorengeht. Außerdem kann der Nutzer so gegebenenfalls über mehrere Vorrichtungen auf den gleichen, zentral gespeicherten geheimen Schlüssel zugreifen. Gleichzeitig liegt aber ein möglicher Vorteil der Erfindung liegt darin, dass der geheime Schlüssel dennoch dem Nutzer bereitgestellt wird. Hierdurch können beispielsweise Ende-zu-Ende Verschlüsselungen unterstützt werden, da die Nutzereinrichtung selbst für den Nutzer verschlüsselte Daten entschlüsseln kann. Außerdem könnte hierdurch in bestimmten Ausführungsbeispielen der gleiche geheime Schlüssel vom Nutzer für verschiedene Anwendungen genutzt werden.

Ein weiterer möglicher Vorteil der Erfindung liegt darin, dass die Vorhaltung von Nutzerdaten einerseits und die Vorhaltung von geheimen Schlüsseln andererseits vollständig voneinander getrennt werden. An der zweiten Einrichtung ist nicht bekannt, zu wem die gespeicherten geheimen Schlüssel gehören. In der ersten Einrichtung ist der geheime Schüssel weder im Klartext noch verschlüsselt gespeichert, und er wird dort auch nicht für ein bloßes Weiterleiten erhalten. Ein Abrufen eines geheimen Schlüssels von der zweiten Einrichtung durch die erste Einrichtung ist nicht implementiert. Vielmehr wird der geheime Schlüssel direkt von der zweiten Einrichtung an die Nutzervorrichtung übermittelt. Hierdurch kann die Schnittstelle zwischen erster Einrichtung und zweiter Einrichtung in Hinblick auf potentielle Angreifer besonders sicher gestaltet werden. Ein weiterer möglicher Vorteil der Erfindung besteht darin, dass die Schlüsselkennung für den Abruf dabei nicht über die Nutzervorrichtung an die zweite Einrichtung übertragen wird, wodurch ein Angriff auf die zweite Einrichtung weiter erschwert werden könnte.

Eine beispielhafte erfindungsgemäße Vorrichtung gemäß dem ersten Aspekt umfasst Mittel zur Ausführung des erfindungsgemäßen Verfahrens gemäß dem ersten Aspekt. Die Vorrichtung kann beispielsweise ein Server oder ein Modul für einen Server der ersten Einrichtung sein.

Eine beispielhafte erfindungsgemäße Vorrichtung gemäß dem zweiten Aspekt umfasst Mittel zur Ausführung des erfindungsgemäßen Verfahrens gemäß dem zweiten Aspekt. Die Vorrichtung kann beispielsweise ein Server oder ein Modul für einen Server der zweiten Einrichtung sein.

Die Mittel der Vorrichtungen gemäß dem ersten bzw. zweiten Aspekt könnten jeweils Hardware-und/oder Softwarekomponenten umfassen. In einer beispielhaften Ausführungsform könnten die Mittel nur einen Schaltkreis umfassen, in dem entsprechende Funktionen hardwaremäßig implementiert sind. In einer anderen beispielhaften Ausführungsform könnten die Mittel zumindest einen Prozessor und zumindest einen Speicher mit einem geeigneten Programm umfassen.

So umfasst für den ersten bzw. den zweiten Aspekt eine beispielhafte Ausführungsform einer erfindungsgemäßen Vorrichtung zumindest einen Prozessor und zumindest einen Speicher, wobei in dem Speicher ein Programmanweisungen umfassendes Programm gespeichert ist, und wobei der Speicher und das Programm eingerichtet sind, um, mit dem Prozessor, die Vorrichtung zumindest zu veranlassen, das erfindungsgemäße Verfahren gemäß dem ersten Aspekt bzw. gemäß dem zweiten Aspekt auszuführen, wenn das Programm auf dem Prozessor ausgeführt wird. Die Vorrichtung ist beispielsweise softwaremäßig eingerichtet, um das Verfahren ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor sollen unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher des Prozessors. Unter einem Programmspeicher soll unter anderem ein nicht-flüchtiger Speicher und unter einem Hauptspeicher ein flüchtiger oder ein nicht-flüchtiger Speicher, insbesondere ein Speicher mit wahlfreiem Zugriff (Random Access Memory RAM) und/oder ein Flash-Speicher, verstanden werden. Nicht-flüchtige Speicher sind z.B. Speicher mit wahlfreiem Zugriff (RAM) wie z.B. NOR-Flash-Speicher oder mit sequentiellem Zugriff wie z.B. NAND-Flash-Speicher und/oder Speicher mit Nur-Lese-Zugriff (ROM) wie z.B. EPROM-, EEPROM-, oder ROM-Speicher. Der Speicher kann beispielsweise gegenständlich ausgebildet sein.

Für den ersten bzw. den zweiten Aspekt umfasst eine beispielhafte Ausführungsform eines erfindungsgemäßen Programms Programmanweisungen, wobei die Programmanweisungen eine Vorrichtung zur Ausführung des erfindungsgemäßen Verfahrens gemäß dem ersten Aspekt bzw. gemäß dem zweiten Aspekt veranlassen, wenn das Programm von dem Prozessor ausgeführt wird. Ein Programm ist beispielsweise über ein Netz wie ein lokales Netz, ein Weitverkehrsnetz, ein virtuelles Netz, ein Funknetz, wie ein Mobilfunknetz, ein sonstiges Telefonnetz und/oder das Internet verteilbar. Ein Programm kann zumindest teilweise Software und/oder Firmware eines Prozessors sein. Zum Beispiel ist das erfindungsgemäße Programm in einem Speicher der erfindungsgemäßen Vorrichtung gemäß dem ersten bzw. zweiten Aspekt gespeichert. Es versteht sich, dass unter dem Begriff Programm jeweils auch eine Zusammenstellung mehrerer Programme verstanden werden kann.

Für den ersten bzw. den zweiten Aspekt speichert eine beispielhafte Ausführungsform eines erfindungsgemäßen Speichermediums ein erfindungsgemäßes Programm gemäß dem ersten oder zweiten Aspekt. Das Speichermedium ist beispielsweise ein computerlesbares Speichermedium, welches das erfindungsgemäße Programm enthält und zum Beispiel als magnetisches, elektrisches, elektro-magnetisches, optisches und/oder andersartiges Speichermedium ausgebildet ist. Das Speichermedium kann insbesondere ein physikalisches und/oder gegenständliches Speichermedium sein. Das Speichermedium ist beispielsweise tragbar oder in einer Vorrichtung fest installiert. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

In einer beispielhaften Ausführungsform umfasst ein erfindungsgemäßes System eine erste Einrichtung mit einer Ausführungsform einer Vorrichtung gemäß dem ersten Aspekt und einem Speicher eingerichtet zum Speichern einer Mehrzahl von einem jeweiligen Nutzer zugeordneten Schlüsselkennungen. In einer beispielhaften Ausführungsform umfasst ein erfindungsgemäßes System alternativ oder zusätzlich eine zweite Einrichtung mit einer Ausführungsform einer Vorrichtung gemäß dem zweiten Aspekt und einem Speicher eingerichtet zum Speichern einer Mehrzahl von einer jeweiligen Schlüsselkennung zugeordneten geheimen Schlüsseln. Die erste Einrichtung kann dabei beispielsweise ausschließlich zum Bereitstellen der Schlüsselkennungen vorgesehen sein oder noch weitere Dienste anbieten. So könnte die erste Einrichtung beispielsweise eine Einrichtung eines Nachrichtenzustellers oder eines Datenbankanbieters sein. Die zweite Einrichtung könnte beispielsweise ein Trustcenter sein.

In einer beispielhaften Ausführungsform kann die Vorrichtung der ersten Einrichtung eine Gültigkeit eines erhaltenen Identifikators überprüfen, wobei eine Schlüsselkennung nur bestimmt und übermittelt wird, wenn eine Gültigkeit des erhaltenen Identifikators festgestellt wird. Dies kann den Vorteil bieten, dass eine zusätzliche Sicherheit erhalten wird. Die Gültigkeit eines Identifikators kann beispielsweise nur gegeben sein, solange der zugeordnete Nutzer bei der ersten Einrichtung noch eingeloggt ist und/oder solange seit der Erzeugung des Identifikators eine vorgegebene Zeit noch nicht überschritten wurde. Wird die Zuordnung in der ersten Einrichtung gelöscht, sobald sich ein Nutzer ausloggt oder sobald eine bestimmte Zeit verstrichen ist, so kann die Feststellung der Gültigkeit auch implizit erfolgen, da sich in dem Fall kein dem Identifikator zugeordneter Nutzer und damit auch keine dem Nutzer zugeordnete Schlüsselkennung mehr ermitteln lässt. Es versteht sich, dass für die Überprüfung der Gültigkeit des Identifikators zusätzlich oder alternativ auch andere Kriterien berücksichtigt werden können.

In einer beispielhaften Ausführungsform der Erfindung kann die erste Einrichtung verschlüsselte Daten für den Nutzer speichern, die in der Nutzervorrichtung mittels eines dem Nutzer zugeordneten geheimen Schlüssels in der zweiten Einrichtung entschlüsselbar sind. Ein Zugriff auf diese Daten in der ersten Einrichtung kann für den Nutzer beispielsweise nach der zuvor erwähnten Authentifizierung oder nach einer vorangehenden oder nachfolgenden separaten Authentifizierung freigegeben werden.

Für diese Ausführungsform kann die Erfindung von besonderem Vorteil sein, da hier auch die Bereitstellung von Daten und die Bereitstellung eines geheimen Schlüssels zum Entschlüsseln der Daten vollständig voneinander getrennt werden. Für besonders vertrauliche Informationen können besonders hohe Anforderungen an eine Absicherung bestehen, dass nur der beabsichtigte Empfänger die bereitgestellten Informationen nutzen kann. Dies kann beispielsweise Berufsgeheimnisse von bestimmten Berufsgruppen, wie Ärzten oder Anwälten, betreffen, die besonderen Geheimhaltungspflichten unterliegen. Durch die Trennung zwischen Datenbereitstellung und Schlüsselbereitstellung kann eine besonders hohe Sicherheit bezüglich der Vertraulichkeit erzielt werden. Das heißt, keine Einrichtung hat Zugriff sowohl auf verschlüsselte Daten als auch auf den für die Entschlüsselung erforderlichen geheimen Schlüssel - auch nicht kurzzeitig und auch nicht in verschlüsselter Form.

Ist die erste Einrichtung dazu eingerichtet, Daten für Nutzer zu speichern, die zumindest teilweise verschlüsselt sein können, so können diese Daten für den Nutzer von einer Vorrichtung eines Dritten verschlüsselt und der ersten Einrichtung zur Verfügung gestellt werden oder von einer Vorrichtung des Nutzers verschlüsselt und der ersten Einrichtung zur Verfügung gestellt werden.

Der geheime Schlüssel könnte in der zweiten Einrichtung unverschlüsselt gespeichert werden, da hier keine Zuordnung der geheimen Schlüssel zu einem jeweiligen Nutzer gespeichert ist. Eine Verschlüsselung der geheimen Schlüssel bietet aber eine noch höhere Sicherheit, da ein unberechtigt ausgelesener Schlüssel nicht unmittelbar verwendet werden kann. Der in der zweiten Einrichtung gespeicherte geheime Schlüssel könnte beispielsweise mit einem Passwort verschlüsselt sein, das auf einer Nutzereingabe beruht. Der geheime Schlüssel könnte dann in der verschlüsselten Form an die Nutzervorrichtung übertragen werden, wo das Passwort anhand einer Nutzereingabe erneut generiert und zur Entschlüsselung des geheimen Schlüssels genutzt werde könnte. Hierzu muss sich der Nutzer die Nutzereingabe für jeden Abruf des geheimen Schlüssels merken.

In einer anderen beispielhaften Ausführungsform sind die geheimen Schlüssel in der zweiten Einrichtung verschlüsselt mit der zugehörigen Schlüsselkennung gespeichert, wobei der basierend auf der Schlüsselkennung ermittelte geheime Schlüssel ein mit der Schlüsselkennung verschlüsselter geheimer Schlüssel ist. Die Vorrichtung der zweiten Einrichtung kann dann den verschlüsselten geheimen Schlüssel mit der empfangenen Schlüsselkennung entschlüsseln, wobei die Übermittlung des geheimen Schlüssels an die Nutzervorrichtung eine gesicherte Übermittlung des entschlüsselten geheimen Schlüssels umfasst.

Die Sicherung der Übermittlung kann auf beliebige Weise erfolgen. Beispielsweise könnte die Kommunikationsstrecke zwischen der Vorrichtung der zweiten Einrichtung und der Nutzervorrichtung insgesamt gesichert werden, zum Beispiel durch Verwendung einer TLS (Transport Layer Security) Verbindung. Zusätzlich oder alternativ könnte der geheime Schlüssel vor der Übermittlung mit einem der Nutzervorrichtung bekannten Passwort verschlüsselt werden.

In einer beispielhaften Ausführungsform kann die Vorrichtung der zweiten Einrichtung für die gesicherte Übermittlung des entschlüsselten geheimen Schlüssels den entschlüsselten geheimen Schlüssel mit einem von der Nutzereinrichtung erhaltenen Einmalpassworts verschlüsseln, das mit einem öffentlichen Schlüssel eines Schlüsselpaars der zweiten Einrichtung verschlüsselt ist, wobei das erhaltene verschlüsselte Einmalpasswort mit einem privaten Schlüssel des Schlüsselpaars der zweiten Einrichtung entschlüsselt wird, bevor es für eine Verschlüsselung des entschlüsselten geheimen Schlüssels des Nutzers verwendet wird. Die Übermittlung des geheimen Schlüssels an die Nutzervorrichtung kann dann eine Übermittlung des mit dem Einmalpasswort verschlüsselten geheimen Schlüssels umfassen. Die Verwendung eines Einmalpassworts kann ohne Eingabe eines Nutzers erfolgen und damit für den Nutzer besonders komfortabel sein.

In einer beispielhaften Ausführungsform sind die geheimen Schlüssel in der zweiten Einrichtung zugeordnet zu einem kryptografisch abgeleitetem Wert einer jeweiligen Schlüsselkennung abgespeichert, wobei das Ermitteln eines geheimen Schlüssels basierend auf der empfangenen Schlüsselkennung ein kryptografisches Ableiten eines Werts der empfangenen Schlüsselkennung und ein Ermitteln eines mit Zuordnung zu dem kryptografisch abgeleiteten Wert gespeicherten geheimen Schlüssels umfasst. Die Abspeicherung des verschlüsselten geheimen Schlüssels mit Zuordnung zu einem kryptografisch abgeleiteten Wert der Schlüsselkennung kann den Vorteil bieten, dass nur mit Kenntnis der Schlüsselkennung der geheime Schlüssel noch nicht ohne Weiteres aus einem Speicher der zweiten Einrichtung abgerufen werden kann. Ein Beispiel für einen kryptografisch abgeleiteten Wert ist ein Hashwert (oder Hash), der aus der Schlüsselkennung mit Hilfe einer Hashfunktion erhalten wird. Als Hashfunktion kann dabei beispielsweise eine perfekte Hashfunktion verwendet werden, so dass sich für jede mögliche Schlüsselkennung ein anderer Hashwert ergibt.

Der geheimen Schlüssel des Nutzers kann beispielsweise ein Schüssel für eine symmetrische Verschlüsselung oder beispielsweise der private Schlüssel eines Schlüsselpaars für eine asymmetrische Verschlüsselung sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### Kurze Beschreibung der Zeichnungen

In den Figuren zeigt:
- Fig. 1: eine schematische Übersicht über eine beispielhafte Ausführungsform eines erfindungsgemäßen Systems;
- Fig. 2: ein schematisches Blockdiagramm mit beispielhaften Details des Systems aus Figur 1;
- Fig. 3: ein Ablaufdiagramm mit ersten beispielhaften Verfahrensschritten in dem System aus Figur 2; und
- Fig. 4: ein Ablaufdiagramm mit weiteren beispielhaften Verfahrensschritten in dem System aus Figur 2.

### Detaillierte Beschreibung einiger beispielhafter Ausführungsformen der Erfindung

Die vorliegende Erfindung wird im Folgenden anhand von beispielhaften Ausführungsformen beschrieben, die eine Verwendung von geheimen Schlüsseln unterstützen.

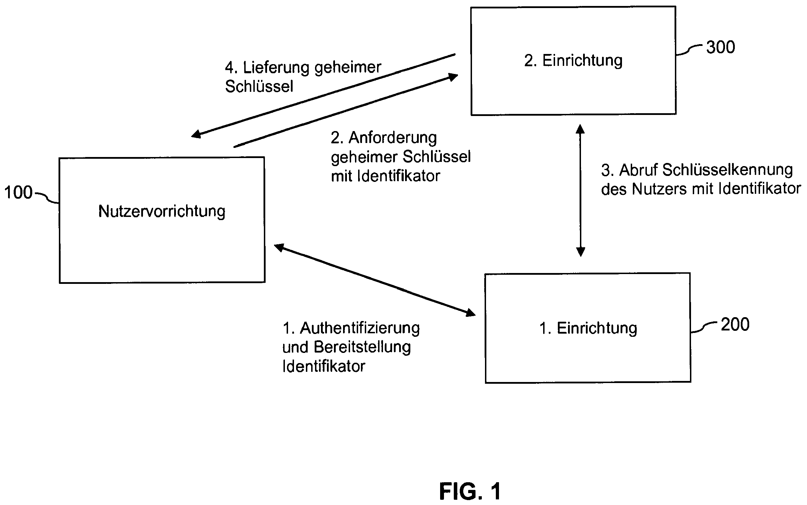

Figur 1 zeigt eine schematische Übersicht über eine beispielhafte Ausführungsform eines erfindungsgemäßen Systems. Das System umfasst eine Nutzervorrichtung 100, eine erste Einrichtung 200 und eine zweite Einrichtung 300.

In dem System ist dem Nutzer der Nutzervorrichtung 100 ein geheimer Schlüssel zugeordnet. Der geheime Schlüssel könnte beispielsweise ein Schlüssel für eine symmetrische Verschlüsselung sein, bei der Daten basierend auf dem gleichen geheimen Schlüssel verschlüsselt und entschlüsselt werden. Alternativ könnte der geheime Schlüssel beispielsweise ein privater Schlüssel eines Schlüsselpaars für eine asymmetrische Verschlüsselung sein, bei der Daten mit einem öffentlichen Schlüssel eines Schlüsselpaars verschlüsselt werden, aber nur mit dem zugehörigen privaten Schlüssel des Schlüsselpaars entschlüsselt werden können.

Der geheime Schlüssel ist jedoch nicht in der Nutzervorrichtung 100 gespeichert, sondern nur in der zweiten Einrichtung 300. Dabei ist der Schlüssel in der zweiten Einrichtung 300 nicht unmittelbar dem Nutzer zugeordnet, sondern nur einer Schlüsselkennung oder einer Ableitung der Schlüsselkennung.

In der Nutzervorrichtung 100 ist auch die dem Nutzer zugeordnete Schlüsselkennung nicht gespeichert, so dass ein unmittelbarer Abruf des geheimen Schlüssels von der zweiten Einrichtung durch die Nutzervorrichtung 100 nicht möglich ist. Eine Zuordnung von Schlüsselkennungen zu Nutzern ist in der ersten Einrichtung 200 gespeichert.

Benötigt der Nutzer nun seinen geheimen Schlüssel, beispielsweise zum Entschlüsseln von verschlüsselten Daten, so muss er sich zunächst bei der ersten Einrichtung 200 authentifizieren. Daraufhin generiert eine Vorrichtung der ersten Einrichtung 200 einen temporären Identifikator und stellt ihn der Nutzervorrichtung 100 zur Verfügung. Außerdem sorgt die Vorrichtung der ersten Einrichtung 200 dafür, dass der ersten Einrichtung 200 eine Zuordnung zwischen dem temporären Identifikator und dem Nutzer gespeichert wird.

Mit dem erhaltenen Identifikator kann die Nutzervorrichtung 100 nun den geheimen Schlüssel von der zweiten Einrichtung 300 anfordern.

Eine Vorrichtung der zweiten Einrichtung 300 versucht daraufhin von der ersten Einrichtung 200 mittels des erhaltenen Identifikators die Schlüsselkennung für den Nutzer abzurufen. Die Vorrichtung der ersten Einrichtung 200 ermittelt, welchem Nutzer der Identifikator zugeordnet ist. Dann sucht sie die Schlüsselkennung für den zugehörigen Nutzer heraus und übermittelt sie an die zweite Einrichtung 300.

Basierend auf der Schlüsselkennung kann die Vorrichtung der zweiten Einrichtung 300 nun den geheimen Schlüssel des Nutzers bestimmen und der Nutzervorrichtung 100 zur Verfügung stellen.

Die erste Einrichtung 200 könnte optional zusätzlich Daten für den Nutzer bereitstellen, die zumindest teilweise verschlüsselt sein können. Dies ist jedoch nicht zwingend erforderlich. Der Nutzer könnte verschlüsselte Daten beispielsweise auch in der Nutzervorrichtung 100 oder in einem mit der Nutzervorrichtung 100 verbindbaren Speicher speichern oder die verschlüsselten Daten über ein Kommunikationsnetz direkt von einem Dritten erhalten.

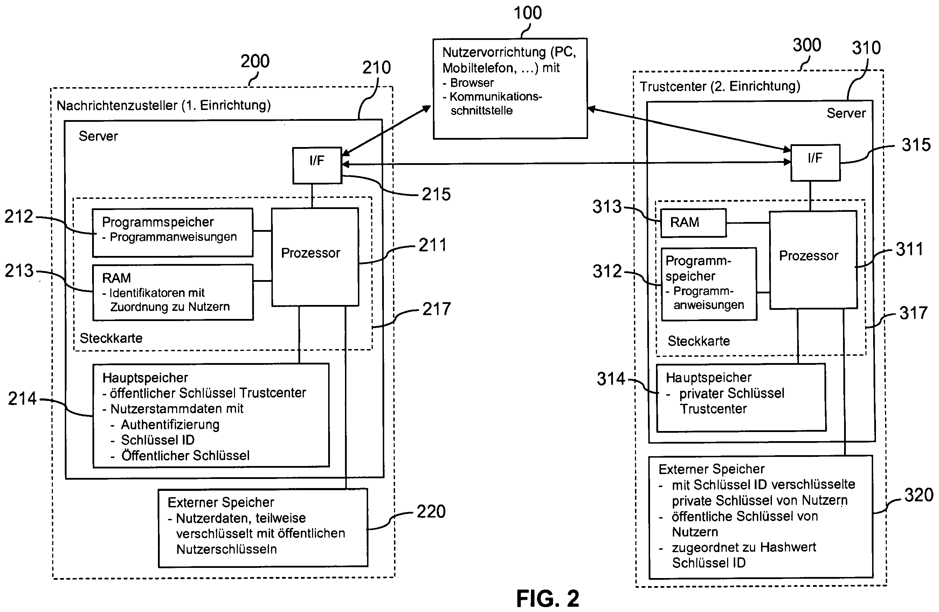

Figur 2 zeigt ein Blockdiagramm mit beispielhaften Details des Systems aus Figur 1. Die Nutzervorrichtung 100, die erste Einrichtung 200 und die zweite Einrichtung 300 weisen dabei die gleichen Bezugszeichen auf wie in Figur 1.

Die Nutzervorrichtung 100 ist hier beispielhaft ein Personal Computer (PC), ein Notebook, ein Tablet-Computer, ein Mobiltelefon oder ein beliebiges anderes Gerät, das einen Browser und eine Kommunikationsschnittstelle aufweist. Die Kommunikationsschnittstelle kann eine beliebige Schnittstelle sein, die einen Austausch von Daten zwischen der Nutzervorrichtung 100 und der ersten Einrichtung 200 und der zweiten Einrichtung 300 ermöglicht, insbesondere, aber nicht notwendigerweise über das Internet. Sie kann eine Funkschnittstelle sein, die den Zugang zum Internet beispielsweise über ein lokales Funknetz (Wireless Local Area Network WLAN) oder über ein Mobilfunknetz ermöglicht. Sie kann ebenso eine kabelgebundene Schnittstelle sein, die einen Zugang zum Internet über ein Kabel ermöglicht, wie beispielsweise über einen DSL-Anschluss oder ein lokales Netz (Local Area Network LAN).

Die erste Einrichtung 200 ist hier beispielhaft eine Einrichtung eines Nachrichtenzustellers.

Die Einrichtung 200 umfasst einen Server 210 und einen externen Speicher 220.

Der Server 210 umfasst einen Prozessor 211 und, mit dem Prozessor 211 verbunden, einen Programmspeicher 212, einen als RAM ausgebildeten Arbeitsspeicher 213, einen Hauptspeicher 214 und eine Kommunikationsschnittstelle (I/F) 215.

Der Programmspeicher 212 ist ein Speichermedium, das Programme, die für den Betrieb des Servers 210 vorgesehen sind, dauerhaft speichert; d.h. in der Regel bis sie von einem Administrator gelöscht werden. Ein Programm könnte insbesondere auch Daten für eine von dem Nachrichtenzusteller bereitgestellte Webseite umfassen. Ein Programm umfasst Programmanweisungen zum Unterstützen der Nutzung eines geheimen Schlüssels.

Der Arbeitsspeicher 213 ist dazu eingerichtet, um diverse Informationen zeitweise zu speichern.

Der Hauptspeicher 214 ist dazu eingerichtet, um Nutzerstammdaten zu speichern. Nutzerstammdaten für einen Nutzer können angelegt werden, wenn ein Nutzer einen von dem Nachrichtenzusteller bereitgestellten Dienst zur Übermittlung elektronsicher Nachrichten nutzen möchte und dafür beim Nachrichtenzusteller eine Freischaltung einer Portalbenutzung beantragt. Der Nachrichtenzusteller schaltet die Portalbenutzung frei, wenn alle vorgesehenen Bedingungen erfüllt sind, und legt einen Satz Nutzerstammdaten für den Nutzer an. Sie können beispielsweise Daten für eine Authentifizierung des Nutzers beinhalten, wie einen Nutzernamen und/oder eine Nachrichtenzustelladresse und ein Passwort. Als Teil der Nutzerstammdaten können außerdem eine Schlüsselkennung (Schlüssel ID) und ein öffentlicher Schlüssel eines Schlüsselpaars hinterlegt werden. Neben den Nutzerstammdaten könnte der Hauptspeicher 214 beispielsweise einen öffentlichen Schlüssel der zweiten Einrichtung 300 speichern.

Der Programmspeicher 212 oder der Hauptspeicher 214 des Servers 210 speichert außerdem eine Anwendung, die von einer Nutzervorrichtung 100 über einen Browser vom Server 210 bei Bedarf jeweils heruntergeladen und ausgeführt werden kann. Eine solche Anwendung könnte beispielsweise als Java-Applet ausgeführt sein und unterstützt die Nutzung eines geheimen Schlüssels auf Seiten der Nutzervorrichtung 100.

Der Prozessor 211 ist dazu eingerichtet, um Programme aus dem Programmspeicher 212 auszuführen und damit die erste Einrichtung 200 bzw. den Server 210 der ersten Einrichtung 200 zu veranlassen, bestimmte Aktionen auszuführen. Hierbei können beliebige Informationen vom Prozessor 211 im Arbeitsspeicher 213 zwischengespeichert werden.

Der Prozessor 211 könnte ein Mikroprozessor sein. Er könnte auch in einen integrierten Schaltkreis (IC) eingebettet sein, zum Beispiel zusammen mit einem Speicher. Beispielhaft angedeutet ist eine Steckkarte 217. Eine solche Komponente könnte einen Schaltkreis mit dem Prozessor 211, dem Programmspeicher 212 und dem Arbeitsspeicher 213 enthalten.

Die Kommunikationsschnittstelle 215 kann eine beliebige Schnittstelle sein, die einen Austausch von Daten zwischen der ersten Einrichtung 200 und Nutzervorrichtungen einerseits sowie der ersten Einrichtung 200 und der zweiten Einrichtung 300 andererseits ermöglicht, beispielsweise aber nicht notwendigerweise über das Internet. Sie kann eine Funkschnittstelle oder eine kabelgebundene Schnittstelle sein. Es versteht sich, dass für die Kommunikation mit Nutzervorrichtungen und mit der zweiten Einrichtung 300 auch zwei verschiedene Schnittstellen vorgesehen sein können.

Der externe Speicher 220 kann dazu eingerichtet sein, Daten einer Datenbank zu speichern. Die Datenbank kann beispielsweise Postfächer für elektronische Nachrichten für verschiedene Nutzer bereitstellen. Anhänge können optional separat gespeichert werden. Diese können verschlüsselt oder unverschlüsselt sein. Wenn sie verschlüsselt sind, sind sie bei korrekter Verschlüsselung mit dem öffentlichen Schlüssels eines Schlüsselpaars des Postfachnutzers verschlüsselt.

Das Programm zur Unterstützung einer Nutzung eines geheimen Schlüssels in Programmspeicher 212 könnte ein Ausführungsbeispiel eines Programms gemäß dem ersten Aspekt der Erfindung sein, der Programmspeicher 212 könnte ein Ausführungsbeispiel eines computerlesbaren Speichermediums gemäß dem ersten Aspekt der Erfindung sein, und der Server 210 oder die Steckkarte 217 könnte ein Ausführungsbeispiel einer erfindungsgemäßen Vorrichtung gemäß dem ersten Aspekt sein.

Es versteht sich, dass die Einrichtung 200 auch auf beliebige andere Art und Weise zusammengestellt sein kann. So könnte der Speicher 220 auch in den Server 210 integriert sein, oder der Hauptspeicher 214 und der externer Speicher 220 könnten zusammengefasst sein, entweder innerhalb von Server 210 oder außerhalb von Server 210. Der externe Speicher 220 könnte auch von einem weiteren Server bereitgestellt werden.

Die zweite Einrichtung 300 kann beispielsweise ein staatlich zertifiziertes Trustcenter sein.

Die Einrichtung 300 umfasst ebenfalls einen Server 310 und einen externen Speicher 320.

Der Server 310 umfasst ebenfalls einen Prozessor 311 und, mit dem Prozessor 311 verbunden, einen Programmspeicher 312, einen als RAM ausgebildeten Arbeitsspeicher 313, einen Hauptspeicher 314 und eine Kommunikationsschnittstelle (I/F) 315.

Der Programmspeicher 312 ist ein Speichermedium, das Programme mit Programmanweisungen, die für den Betrieb des Servers 310 vorgesehen sind, dauerhaft speichert. Sie umfassen ein Programm mit Programmanweisungen zum Unterstützen einer Nutzung eines geheimen Schlüssels. Die Programme könnten außerdem beispielsweise ein Programm zum Generieren eines Schlüsselpaars für eine asymmetrische Verschlüsselung umfassen. Der Arbeitsspeicher 313 ist dazu eingerichtet, um Informationen zeitweise zu speichern. Der Hauptspeicher 314 ist dazu eingerichtet, um einen privaten Schlüssel eines Schlüsselpaars des Trustcenters 300 zu speichern.

Der Prozessor 311 könnte ein Mikroprozessor sein. Er könnte auch in einen integrierten Schaltkreis eingebettet sein, zum Beispiel zusammen mit einem Speicher. Beispielhaft angedeutet ist eine Steckkarte 317, die einen Schaltkreis mit dem Prozessor 311, dem Programmspeicher 312 und dem Arbeitsspeicher 313 enthält.

Der Prozessor 311 ist dazu eingerichtet, um Programme aus dem Programmspeicher 312 auszuführen und damit die erste Einrichtung 300 zu veranlassen, bestimmte Aktionen auszuführen. Hierbei können beliebige Informationen vom Prozessor 311 im Arbeitsspeicher 313 zwischengespeichert werden.

Die Kommunikationsschnittstelle 315 kann eine beliebige Schnittstelle sein, die einen Austausch von Daten zwischen der zweiten Einrichtung 300 und Nutzervorrichtungen einerseits sowie der zweiten Einrichtung 300 und der ersten Einrichtung 200 andererseits ermöglicht, beispielsweise aber nicht notwendigerweise über das Internet. Sie kann eine Funkschnittstelle oder eine kabelgebundene Schnittstelle sein. Es versteht sich, dass für die Kommunikation mit Nutzervorrichtungen und mit der ersten Einrichtung 200 auch zwei verschiedene Schnittstellen vorgesehen sein können.

Der externe Speicher 320 kann dazu eingerichtet sein, Daten einer Datenbank zu speichern. Die Datenbank kann so angelegt sein, dass jeweils auf einen Datensatz über einen Hashwert einer Schlüsselkennung zugegriffen werden kann. Die einem Hashwert zugeordneten Daten umfassen einen öffentlichen Schlüssel und einen mit der Schlüsselkennung verschlüsselten privaten Schlüssel, wobei öffentlicher Schlüssel und privater Schlüssel ein Schlüsselpaar für einen bestimmten Nutzer bilden. Der private Schlüssel ist dabei ein beispielhafter geheimer Schlüssel eines Nutzers. Der Nutzer ist in der Einrichtung 300 nicht identifizierbar.

Ein Schlüsselpaar und eine zugehörige eindeutige Schlüsselkennung für einen jeweiligen Nutzer könnten dabei beispielsweise ohne Vorgaben durch den Nutzer oder den Nachrichtenzusteller von dem Trustcenter 300 selbst generiert und zur Erzeugung des verschlüsselten privaten Schlüssels und des Hashwerts verarbeitetet werden. Dies könnte auf eine jeweilige Aufforderung durch den Server 210 hin erfolgen, beispielsweise, wenn beim Nachrichtenzusteller eine Portalfreischaltung für einen neu registrierten Nutzer erfolgt. Alternativ könnte die Aufforderung jeweils durch eine Nutzervorrichtung eines Nutzers erfolgen. Diese könnte durch eine im Browser der Nutzervorrichtung laufende Anwendung generiert werden, die der Nutzervorrichtung von der Einrichtung 200 nach dem ersten Einloggen eines neu registrierten Nutzers zur Verfügung gestellt wird. Die Schlüsselkennung und der öffentliche Schlüssel des Schlüsselpaars könnten dann dem Server 210 jeweils direkt oder über die jeweilige Nutzervorrichtung zur Verfügung gestellt werden, wo sie als Teil der Nutzerstammdaten in Hauptspeicher 214 gespeichert werden können. Der Klartext des erzeugten privaten Schlüssels und den Klartext der erzeugten Schlüsselkennung werden im Trustcenter 300 gelöscht.

Das Programm zur Unterstützung einer Nutzung eines geheimen Schlüssels in Programmspeicher 312 könnte ein Ausführungsbeispiel eines Programms gemäß dem zweiten Aspekt der Erfindung sein, der Programmspeicher 312 könnte ein Ausführungsbeispiel eines computerlesbaren Speichermediums gemäß dem zweiten Aspekt der Erfindung sein, und der Server 310 oder die Steckkarte 317 könnte ein Ausführungsbeispiel einer erfindungsgemäßen Vorrichtung gemäß dem zweiten Aspekt sein.

Ähnlich wie zu Einrichtung 200 ausgeführt versteht es sich, dass auch das Trustcenter 300 auch auf beliebige andere Art und Weise zusammengestellt sein kann.

Die Einrichtungen 200 und 300 aus Figur 2 können generell in vielfältiger Weise abgewandelt werden, sowohl durch das Weglassen von Komponenten wie auch durch das Hinzufügen oder Abwandeln von Komponenten. Hierdurch können sich weitere oder alternative Vorteile ergeben.

Die Funktionen der Einrichtung 200 des Nachrichtenzustellers könnten beispielsweise in dem E-POSTBRIEF System der Anmelderin implementiert werden; die Funktionen des Trustcenters 300 könnte beispielsweise im hiervon separaten System Signtrust der Anmelderin implementiert werden; und die elektronische Nachrichten könnten E-Postbriefe sein, die von einem Absender bei einem Webportal des E-POSTBRIEF Systems hinterlegt und dort von einem Empfänger abgerufen werden können.

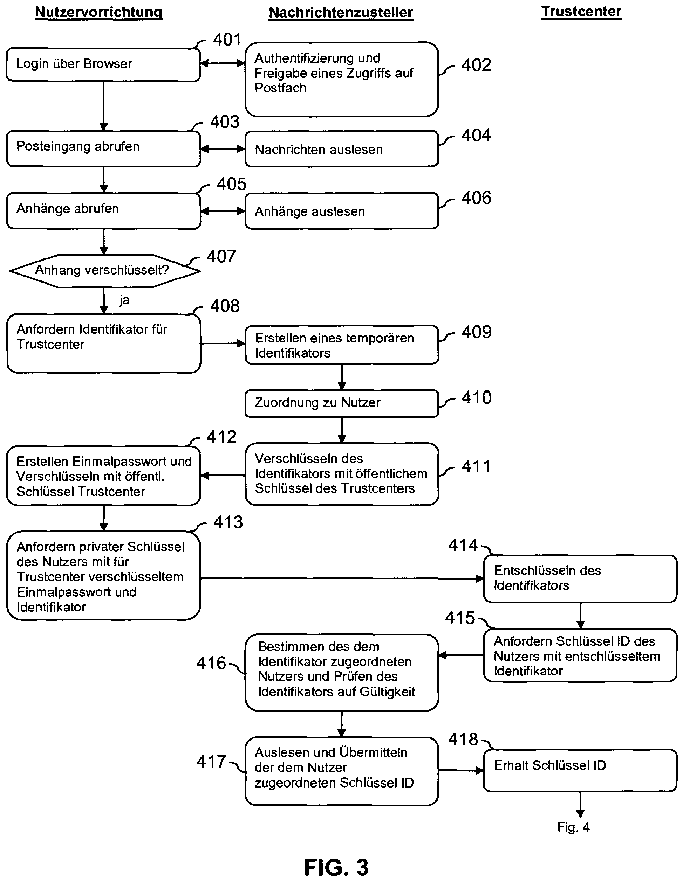

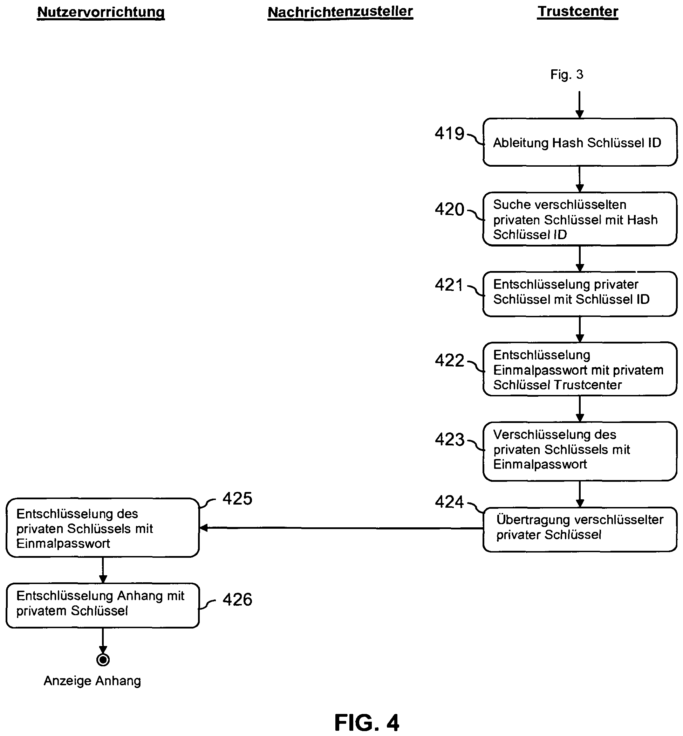

Figuren 3 und 4 zeigen Ablaufdiagramme, die beispielhafte Ausführungsformen von erfindungsgemäßen Verfahren gemäß dem ersten und zweiten Aspekt illustrieren, die es einem Nutzer ermöglichen, einen geheimen Schlüssel zu erhalten. Dabei ist Figur 4 die Fortsetzung von Figur 3.

Die gezeigten Aktionen der Nutzervorrichtung 100 werden beispielhaft ausgeführt, wenn die Nutzervorrichtung 100 über den Browser eine Webseite des Nachrichtenzustellers aufruft und die Nutzervorrichtung 100 eine über den Browser geladene Anwendung ausführt. Eine solche Ausführungsform kann besonders komfortabel für den Nutzer sein, da er auf der Nutzervorrichtung 100 keine Programme installieren und aktualisieren muss. Der Nachrichtenzusteller kann so auch gegebenenfalls als Komplettdienstleister auftreten, so dass der Nutzer nur einen Vertrag mit diesem benötigt und keinen separaten Vertrag mit dem Trustcenter 300. Die gezeigten Aktionen der Einrichtung 200 des Nachrichtenzustellers werden ausgeführt, wenn der Prozessor 211 ein entsprechendes Programm aus Programmspeicher 212 abruft und ausführt. Die gezeigten Aktionen des Trustcenters 300 werden ausgeführt, wenn der Prozessor 311 ein entsprechendes Programm aus Pogrammspeicher 312 abruft und ausführt. Die dargestellten Kommunikationen zwischen der Nutzervorrichtung 100, der Einrichtung 200 des Nachrichtenzustellers und dem Trustcenter 300 erfolgt über die jeweilige Kommunikationsschnittstelle unter Nutzung des Internets.

Will ein Absender dem Nutzer der Vorrichtung 100 eine elektronische Nachricht mit verschlüsseltem Anhang übermitteln, so kann der Absender den öffentlichen Schlüssel des Nutzers von der Einrichtung 200 anfordern. Die Einrichtung 200 kann den öffentlichen Schlüssel des Nutzers beispielsweise anhand eines angegebenen Nutzernamens oder einer angegebenen Zustelladresse für den Nutzer in den Nutzerstammdaten aus dem Hauptspeicher 214 auslesen und dem Absender zur Verfügung stellen. Der Absender kann dann eine Datei mit dem öffentlichen Schlüssel des Nutzers verschlüsseln, an die Nachricht anhängen und die Nachricht mit Adressierung an den Nutzer an den Nachrichtenzusteller übermitteln. Die mit dem öffentlichen Schlüssel des Nutzers verschlüsselten Daten können nun nur noch mit dem privaten Schlüssel des Nutzers wieder entschlüsselt werden.

Alle elektronischen Nachrichten werde unabhängig von der Art der Einlieferung und ihren Inhalten innerhalb der Einrichtung 200 des Nachrichtenzustellers dem Empfängerpostfach zugeordnet und zugriffsgeschützt in Speicher 220 abgelegt.

Wenn nun ein Nutzer Posteingänge abrufen möchte, kann er sich über einen Browser der Nutzervorrichtung 100 bei der Einrichtung 200 des Nachrichtenzustellers einloggen. (Aktion 401) Das Einloggen kann beispielsweise die Eingabe und Übermittlung eines Nutzernamens und/oder einer Nutzerzustelladresse und eines Passworts umfassen.

Die Einrichtung 200 führt daraufhin eine Authentifizierung des Nutzers durch. (Aktion 402) Die Authentifizierung kann auf Grundlage der in Hauptspeicher 214 gespeicherten Nutzerstammdaten erfolgen. Beispielsweise könnte die Einrichtung 200 überprüfen, ob in den Nutzerstammdaten ein Datensatz zu dem übermittelten Nutzernamen vorliegt und ob hierzu ein Passwort gespeichert ist, das dem übermittelten Passwort entspricht. Nach erfolgreicher Authentifizierung gibt die Einrichtung 200 den Zugriff auf ein Postfach des Nutzers im Speicher 220 frei. Die Freigabe kann beispielsweise dadurch erfolgen, dass die Einrichtung 200 ein Authentisierungstoken generiert und an die Nutzervorrichtung 100 übermittelt.

Solange der Nutzer bei dem Nachrichtenzusteller eingeloggt bleibt, kann die Nutzervorrichtung 100 nun bei der Einrichtung 200 den Posteingang für den Nutzer abrufen, beispielsweise unter jeweiliger Übermittlung des Authentisierungstokens. (Aktion 403)

Die Einrichtung 200 liest dann alle neuen Nachrichten für den Nutzer in Speicher 220 aus und übermittelt sie an die Nutzervorrichtung 100. (Aktion 404) Dort können die Nachrichten angezeigt werden.

Anhänge könnten von der Einrichtung 200 direkt mit ausgelesen und übermittelt werden. Alternativ kann vorgesehen werden, dass der Nutzer die Nutzervorrichtung 100 veranlasst, die Anhänge der angezeigten Nachrichten je nach Bedarf separat abzurufen. (Aktion 405) In dem Fall liest die Einrichtung 200 erst dann die ausgewählten Anhänge aus dem externen Speicher 220 aus und übermittelt sie an die Nutzervorrichtung 100. (Aktion 406)

Die Nutzervorrichtung 100 überprüft nun, ob einer der erhaltenen Anhänge verschlüsselt ist. (Aktion 407) Ist dies nicht der Fall, so kann der Inhalt des Anhangs unmittelbar ausgegeben werden, beispielsweise über einen Bildschirm, wenn es sich um Text- und/oder Bilddaten handelt.

Ist der Anhang verschlüsselt, so benötigt die Nutzervorrichtung 100 für die Entschlüsselung jedoch zunächst den privaten Schlüssel des Nutzers. Dieser ist in der Nutzervorrichtung 100 nicht gespeichert.

Die Nutzervorrichtung 100 fordert hierzu von der Einrichtung 200 des Nachrichtenzustellers einen Identifikator speziell für einen Abruf des privaten Schlüssels von dem Trustcenter 300 an.

Die Einrichtung 200 erstellt daraufhin einen temporären Identifikator. (Aktion 409)

Die Einrichtung 200 ordnet dem Identifikator den Nutzer zu und speichert die Zuordnung, beispielsweise im Arbeitsspeicher 213. (Aktion 410) Der Nutzer kann dabei beispielsweise über einen Nutzernamen oder eine Nutzerzustelladresse identifiziert werden. Er könnte aber beispielsweise auch über einen separaten Index identifiziert werden, dem die Nutzerstammdaten im Hauptspeicher 214 zugeordnet sein könnten.

Um sicher zu stellen, dass der Identifikator nur vom Trustcenter 300 genutzt werden kann, verschlüsselt die Einrichtung 200 den Identifikator mit dem in Hauptspeicher 214 gespeicherten öffentlichen Schlüssel des Trustcenters 300 und übermittelt den verschlüsselten Identifikator und den öffentlichen Schlüssel des Trustcenters 300 an die Nutzervorrichtung 100. (Aktion 411)

Die Nutzervorrichtung 100 erhält den Identifikator, generiert einen zufälligen Schlüssel für eine symmetrische Verschlüsselung als Einmalpasswort und verschlüsselt dieses mit dem öffentlichen Schlüssel des Trustcenters 300. (Aktion 412) Das Einmalpasswort kann automatisch und ohne Einbindung des Nutzers generiert und verschlüsselt werden. Das unverschlüsselte Einmalpasswort wird in einem Arbeitsspeicher der Nutzervorrichtung 100 vorgehalten.

Die Nutzervorrichtung 100 fordert nun den privaten Schlüssel des Nutzers vom Trustcenter 300 an und übermittelt dazu den verschlüsselten Identifikator und das verschlüsselte Einmalpasswort an das Trustcenter 300. (Aktion 413)

Das Trustcenter 300 entschlüsselt den erhaltenen, mit dem öffentlichen Schlüssel des Trustcenters 300 verschlüsselten Identifikator mittels des im Hauptspeicher 314 gespeicherten privaten Schlüssels des Trustcenters 300. (Aktion 414)

Mit dem entschlüsselten Identifikator fordert das Trustcenter 300 dann die Schlüsselkennung des Nutzers bei der Einrichtung 200 des Nachrichtenzustellers an. (Aktion 415)

Die Einrichtung 200 ermittelt, ob im Arbeitsspeicher 213 ein entsprechender Identifikator gespeichert und einem Nutzer zugeordnet ist. (Aktion 416) Dabei kann auch auf verschiedene Weisen die Gültigkeit des erhaltenen Identifikators überprüft werden. Beispielsweise könnte ein in Aktion 409 erstellter Identifikator jeweils nur für eine vorgegebene Zeit gültig sein und/oder nur solange der Nutzer bei der Einrichtung 200 eingeloggt ist. Sobald die vorgegebene Zeit verstrichen ist und/oder der Nutzer sich abmeldet, könnte die Zuordnung zwischen Identifikator und Nutzer aus dem Arbeitsspeicher 213 gelöscht werden. Wird dann ein erhaltener Identifikator im Arbeitsspeicher 213 nicht gefunden - sei es, weil er dort nie vorhanden war, sei es, weil er inzwischen wieder gelöscht wurde - so ist er nicht gültig. Alternativ könnte die Zuordnung auch nur gelöscht werden, wenn sich der Nutzer abmeldet. Dann könnte die Zuordnung zusätzlich eine Angabe der Erstellungszeit des Identifikators enthalten, oder der Identifikator könnte selbst eine Angabe seiner Erstellungszeit enthalten. Die angegebene Zeit dürfte dann für eine Gültigkeit des Identifikators beispielsweise nicht länger als eine vorgegebene Zeitspanne zurückliegen. Weiter alternativ könnte die Zuordnung zwischen Identifikator und Nutzer nicht automatisch beim Abmelden des Nutzers gelöscht werden. In dem Fall könnte nach Bestimmung eines zugeordneten Nutzers separat überprüft werden, ob der Nutzer noch eingeloggt ist. Wenn dies nicht der Fall ist, wird der Identifikator als nicht gültig angesehen. Wird ein Identifikator als nicht gültig angesehen, so kann das Trustcenter 300 optional hierüber informiert werden und das Trustcenter 300 kann wiederum optional eine Fehlermeldung an die Nutzervorrichtung 100 ausgeben und die Operation abbrechen.

Könnte ein dem Identifikator zugeordneter Nutzer bestimmt werden und wurde - gegebenenfalls - der Identifikator separat als gültig erachtet, so liest die Einrichtung 200 eine dem Nutzer in den Nutzerstammdaten im Hauptspeicher 214 zugeordnete Schlüsselkennung aus. Diese Schlüsselkennung wird dann an das Trustcenter 300 übermittelt. (Aktion 417)

Es versteht sich, dass die beschriebene Nutzung eines Identifikators lediglich schematisch ist und auf vielfältige Weise modifiziert und verfeinert werden kann. In der Praxis könnte die Identifikation eines Nutzers beim Trustcenter 300 beispielsweise mittels eines Authentisierungstokens in einer Form erfolgen, wie sie in OAuth verwendet wird. Die Verwendung von OAuth könnte von Vorteil sein, da es sich hierbei um ein offenes Protokoll handelt, das eine standardisierte Autorisierung für einen begrenzten Zugang zu einem http Dienst ermöglicht und dabei eine hohe Sicherheit gewährleistet. Andere technische Verfahren können aber ebenso genutzt werden.

Das Trustcenter 300 erhält die Schlüsselkennung (Aktion 418) und leitet davon einen Hashwert unter Nutzung einer Hashfunktion ab (Aktion 419).

Das Trustcenter 300 bestimmt einen verschlüsselten privaten Schüssel, der dem Hashwert im Speicher 320 zugeordnet ist. (Aktion 420)

Das Trustcenter 300 entschlüsselt den verschlüsselten, privaten Schüssel mit der erhaltenen Schlüsselkennung. (Aktion 421)

Das Trustcenter 300 entschlüsselt außerdem das von der Nutzervorrichtung 100 erhaltene verschlüsselte Einmalpasswort mit dem privaten Schüssel des Trustcenters 300. (Aktion 422)

Das Trustcenter 300 kann nun den entschlüsselten privaten Schlüssel des Nutzers mit dem entschlüsselten Einmalpasswort wieder verschlüsseln. (Aktion 423)

Der neu verschlüsselte private Schlüssel des Nutzers wird nun vom Trustcenter 300 an den Browser der Nutzervorrichtung 100 übertragen. (Aktion 424) Das Einmalpasswort dient somit als Transport-PIN (Persönliche Identifikationsnummer) für eine sichere Übertragung des geheimen Schlüssels vom Trustcenter 300 an die Nutzervorrichtung 100.

Alle Zwischenergebnisse, insbesondere die Schlüsselkennung und der Klartext des privaten Schlüssels des Nutzers, werden wieder aus dem Arbeitsspeicher 313 des Trustcenters 300 gelöscht.

Die Nutzervorrichtung 100 erhält den verschlüsselten privaten Schlüssel des Nutzers und entschlüsselt ihn innerhalb des Browsers mit dem gespeicherten Einmalpasswort. (Aktion 425) Der private Schlüssel des Nutzers liegt nun im Klartext im Browser vor.

Schließlich kann die Nutzervorrichtung 100 den abgerufenen, verschlüsselten Anhang mit dem privaten Schlüssel des Nutzers im Browser entschlüsseln (Aktion 426) und - je nach Benutzervorgabe - abspeichern und/oder über eine Benutzerschnittstelle ausgeben, beispielsweise durch Anzeigen auf einem Bildschirm.

Das Einmalpasswort, die verschlüsselten Anhänge und der private Schlüssel des Nutzers können in der Nutzervorrichtung 100 automatisch von der im Browser laufenden Anwendung gelöscht werden, wenn alle vorliegenden verschlüsselten Anhänge entschlüsselt wurden und/oder wenn sich der Nutzer über den Browser vom Nachrichtenzusteller abmeldet.

Abgesehen von der Anmeldung des Nutzers beim Nachrichtenzusteller könnte das Verfahren aus Figuren 3 und 4 ganz ohne Eingabe eines Nutzers ablaufen. Es könnte vollständig intransparent und automatisch erfolgen. Das heißt, für den Nutzer wäre es nicht erkennbar, ob eine elektronische Nachricht einen unverschlüsselten Anhang oder einen verschlüsselten Anhang aufweist. Um dem Nutzer aber die Besonderheit der empfangenen Nachricht anzuzeigen und Vertrauen in das Verfahren zu fördern kann vorgesehen werden, den Vorgang der Entschlüsselung und deren Resultat dem Empfänger gut sichtbar aufzuzeigen.

Die Aktionen der Einrichtung 200 des Nachrichtenzustellers in Figur 3 stellen eine beispielhafte Ausführungsform eines Verfahrens gemäß dem ersten Aspekt der Erfindung dar. Die Aktionen des Trustcenters 300 in Figuren 3 und 4 stellen eine beispielhafte Ausführungsform eines Verfahrens gemäß dem zweiten Aspekt der Erfindung dar.

In beispielhaften Ausführungsformen der Erfindung ist die Abspeicherung der geheimen Schlüssel im Trustcenter 300 somit anonym. Hier ist eine Zuordnung eines Schlüssels zu einem Nutzer nicht bekannt, und bei Verwendung einer Hashfunktion oder einer anderen kryptographischen Ableitung liegt selbst die Zuordnung einer Schlüsselkennung zu einem verschlüsselten privaten Schlüssel nur temporär vor. Eine lokale Rekonstruktion der Schlüsselkennung im Trustcenter 300 und damit der Entschlüsselung der privaten Schlüssel von Nutzern ist nicht möglich. Außerdem wird der private Schlüssel (in verschlüsselter Form) ausschließlich im Trustcenter 300 gespeichert. Es erfolgt also eine vollständige Trennung zwischen Schlüsselverwaltung und Datenspeicherung, so dass gewährleistet ist, dass keine Partei eigenständig Zugriff auf Schlüssel und Daten erhält.

Zusätzlich können sämtliche Daten sowohl in der Einrichtung 300 des Nachrichtenzustellers als auch im Trustcenter 200 durchgehend mit zusätzlichen Systemschlüsseln verschlüsselt gespeichert werden, so dass ein Angreifer auch diese in seine Gewalt bringen müsste. Im Browser der Nutzervorrichtung 100 findet in bestimmten Ausführungsformen keinerlei Persistierung von Daten statt. Das bedeutet, dass ein potentieller Angreifer auch hier nur zur Laufzeit versuchen könnte auf Daten im Browser zuzugreifen. Für die eigentliche Übermittlung von Daten in dem System können für jede der Verbindungen noch beliebige andere Sicherheitsmaßnahmen vorgesehen werden, wie eine sichere Datenübertragung mittels des Transport Layer Security (TLS) Protokolls im Rahmen einer HyperText Transfer Protocol Secure (HTTPS) Anwendung.

Planerische und organisatorische Maßnahmen durch den Empfänger sind nicht erforderlich, da alle erforderlichen Mittel über einen Browser zur Verfügung gestellt werden können.

Da der Abruf des privaten Schlüssels mittels eines Einmalpassworts als Transport-PIN erfolgt, das unabhängig von einem Nutzerpasswort generiert wird, ist der Ansatz auch unabhängig vom verwendeten Login-Verfahren, mit dem sich ein Nutzer bei der ersten Einrichtung anmeldet. Das heißt, es müssen keine Maßnahmen vorgesehen werden, damit das Nutzerpasswort, das dem Nachrichtenzusteller letztendlich beim Login übermittelt wird, zunächst so abgewandelt wird, dass der Nachrichtenzusteller keine Rückschlüsse auf die Transport-PIN ziehen kann.

Es versteht sich, dass die dargestellten und beschriebenen Verfahren im Rahmen der Erfindung in vielfältiger Weise abgewandelt werden können, sowohl durch Hinzufügen, Weglassen, Variieren als auch Vertauschen von einzelnen Aktionen. So könnten beispielsweise die Entschlüsselung in Aktion 422 jederzeit zwischen Aktion 413 und Aktion 423 erfolgen. Des Weiteren könnte beispielsweise auf das Verwenden von Hashwerten verzichtet werden. Die Schlüsselkennung könnte dann in Aktion 420 im Klartext für die Suche nach dem privaten Schlüssel verwendet werden. Des Weiteren könnte anstelle der Verwendung eines Einmalpassworts als Transport-PIN auch eine beliebige andere Maßnahme genutzt werden, um den privaten Schlüssel des Nutzers sicher von dem Trustcenter 300 zur Nutzervorrichtung 100 zu übertragen. Ferner kann das Verfahren nicht nur für Anhänge von elektronischen Nachrichten verwendet werden. Es könnte auch eingesetzt werden, wenn die Nachricht selbst verschlüsselt werden soll.

Der beispielhaft vorgestellte Ansatz könnte auch für andere Dienste als einen Nachrichtenzustelldienst genutzt werden. Eine erste Einrichtung - ähnlich der Einrichtung 200 - könnte beispielsweise einem Datenbankanbieter gehören, der Daten für Nutzer im Netz speichert. In dem Fall könnte eine erste Einrichtung - beispielsweise wieder ein Trustcenter - optional statt eines privaten Schlüssels eines asymmetrischen Schlüsselpaars für einen Nutzer auch einen symmetrischen Schlüssel als geheimen Schlüssel zum Abruf bereithalten. Der Abruf kann im Wesentlichen auf die gleiche Weise erfolgen, wie in Figur 3 und 4 dargestellt. Die Bereitstellung eines öffentlichen Schlüssels des Nutzers kann dann gegebenenfalls entfallen. Die Nutzervorrichtung könnte dann jedes Mal, wenn hinterlegte verschlüsselte Daten ausgelesen werden, den in der zweiten Einrichtung gespeicherten Schlüssel für die symmetrische Verschlüsselung abrufen, um die Daten in der Nutzervorrichtung zu entschlüsseln. Dies kann im Wesentlichen auf die gleiche Weise erfolgen, wie in Figur 3 und 4 dargestellt. Statt Nachrichten und Anhängen werden hier von der Nutzervorrichtung lediglich Daten aus einem Speicher in der zweiten Einrichtung abgerufen, und statt des privaten Schlüssels des Nutzers wird ein Schlüssel des Nutzers für eine symmetrische Verschlüsselung verwendet. Die Nutzervorrichtung könnte dann auch jedes Mal, wenn Daten zum Hinterlegen in der zweiten Einrichtung verschlüsselt werden sollen, zunächst auf analoge Weise den in der ersten Einrichtung gespeicherten Schlüssel für die symmetrische Verschlüsselung der Daten abrufen.

Die dargestellten oder beschriebenen Verbindungen zwischen Komponenten sind als funktionale Verbindungen zu verstehen. Sie können direkt oder indirekt über mehrere andere Komponenten realisiert werden. Die geschilderten Aktionen können auf verschiedene Art und Weise implementiert werden; so ist eine Implementierung nicht nur in Software (durch Programmanweisungen), sondern auch nur in Hardware oder in einer Kombination von beidem denkbar. Jede der dargestellten Komponenten kann auch durch eine Mehrzahl von Komponenten gebildet werden. So könnte statt jedem Prozessors auch eine Mehrzahl an Prozessoren verwendet werden und anstelle jeder Speicherkomponente eine Mehrzahl an Speicherkomponenten. Mehrere Prozessoren und /oder mehrere Speicherkomponenten könnten auch auf mehrere Server einer jeweiligen Einrichtung verteilt sein.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, das für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren ausgeführt von einer Vorrichtung (210) einer ersten Einrichtung (200), die Schlüsselkennungen mit Zuordnung zu einem jeweiligen Nutzer speichert, wobei eine zweite Einrichtung (300) geheime Schlüssel speichert, die sich jeweils mittels einer Schlüsselkennung auffinden lassen, das Verfahren umfassend:
- Authentifizieren eines Nutzers, der sich über eine Nutzervorrichtung (100) bei der ersten Einrichtung (200) einloggt,
- Erzeugen eines temporären Identifikators als Grundlage für einen Abruf eines für den Nutzer in der zweiten Einrichtung (300) bereitgehaltenen geheimen Schlüssels und Zuordnen des Identifikators zu dem Nutzer,
- Übermitteln des Identifikators an die Nutzervorrichtung (100),
- Empfangen einer Anforderung einer Schlüsselkennung von der zweiten Einrichtung (300), wobei die Anforderung einen Identifikator enthält, der der zweiten Einrichtung (300) von einer Nutzervorrichtung (100) übermittelt wurde,
- Ermitteln eines dem erhaltenen Identifikator zugeordneten Nutzers und Bestimmen einer für den ermittelten Nutzer gespeicherten Schlüsselkennung, und
- Übermitteln der Schlüsselkennung an die zweite Einrichtung (300).

2. Verfahren gemäß Anspruch 1, ferner umfassend:
- Überprüfen einer Gültigkeit des erhaltenen Identifikators, wobei eine Schlüsselkennung nur bestimmt und übermittelt wird, wenn eine Gültigkeit des erhaltenen Identifikators festgestellt wird.

3. Verfahren gemäß einem der Ansprüche 1 und 2, wobei die erste Einrichtung (200) verschlüsselte Daten für den Nutzer speichert, die in der Nutzervorrichtung (100) mittels eines dem Nutzer zugeordneten geheimen Schlüssels in der zweiten Einrichtung (300) entschlüsselbar sind, und wobei für den Nutzer nach der Authentifizierung oder nach einer separaten Authentifizierung ein Zugriff auf die Daten in der ersten Einrichtung (200) freigegeben wird.

4. Verfahren gemäß Anspruch 3, wobei die verschlüsselten Daten
- von einer Vorrichtung eines Dritten verschlüsselt und der ersten Einrichtung (200) zur Verfügung gestellt wurden, oder
- von einer Vorrichtung des Nutzers verschlüsselt und der ersten Einrichtung (200) zur Verfügung gestellt wurden.

5. Vorrichtung (210) umfassend Mittel (211, 212, 213) zur Ausführung des Verfahrens gemäß einem der Ansprüche 1 bis 4.

6. Vorrichtung gemäß Anspruch 5, wobei die Vorrichtung ein Server (210) oder ein Modul (217) für einen Server (210) ist.

7. Programm umfassend:
- Programmanweisungen, wobei die Programmanweisungen bei Ausführung durch einen Prozessor (211) eine Vorrichtung (210) zur Ausführung des Verfahrens gemäß einem der Ansprüche 1 bis 4 veranlassen.

8. Verfahren ausgeführt von einer Vorrichtung (310) einer zweiten Einrichtung (300), die geheime Schlüssel speichert, die sich jeweils mittels einer Schlüsselkennung auffinden lassen, wobei eine erste Einrichtung (200) Schlüsselkennungen mit Zuordnung zu einem jeweiligen Nutzer speichert, das Verfahren umfassend:
- Empfangen einer Anforderung eines geheimen Schlüssels von einer Nutzervorrichtung (100) zusammen mit einem temporären Identifikator,
- Anfordern einer Schlüsselkennung von der ersten Einrichtung (200), wobei der empfangene Identifikator übermittelt wird,
- Empfangen einer Schlüsselkennung von der ersten Einrichtung (200) für einen dem Identifikator in der ersten Einrichtung (200) zugeordneten Nutzer,
- Ermitteln eines geheimen Schlüssels basierend auf der empfangenen Schlüsselkennung, und
- Übermitteln des geheimen Schlüssels an die Nutzervorrichtung (100).

9. Verfahren gemäß Anspruch 8, wobei die geheimen Schlüssel in der zweiten Einrichtung (300) verschlüsselt mit der zugehörigen Schlüsselkennung gespeichert sind und wobei der basierend auf der Schlüsselkennung ermittelte geheime Schlüssel ein mit der Schlüsselkennung verschlüsselter geheimer Schlüssel ist, ferner umfassend:
- Entschlüsseln des ermittelten verschlüsselten geheimen Schlüssels mit der empfangenen Schlüsselkennung, wobei die Übermittlung des geheimen Schlüssels an die Nutzervorrichtung (100) eine gesicherte Übermittlung des entschlüsselten geheimen Schlüssels umfasst.

10. Verfahren gemäß Anspruch 9, ferner umfassend für die gesicherte Übermittlung des entschlüsselten geheimen Schlüssels:
- Verschlüsseln des entschlüsselten geheimen Schlüssels mit einem von der Nutzereinrichtung (100) erhaltenen Einmalpassworts, das mit einem öffentlichen Schlüssel eines Schlüsselpaars der zweiten Einrichtung (300) verschlüsselt ist, wobei das erhaltene verschlüsselte Einmalpasswort mit einem privaten Schlüssel des Schlüsselpaars der zweiten Einrichtung (300) entschlüsselt wird, bevor es für eine Verschlüsselung des geheimen Schlüssels des Nutzers verwendet wird, und wobei die Übermittlung des geheimen Schlüssels an die Nutzervorrichtung (100) eine Übermittlung des mit dem Einmalpasswort verschlüsselten geheimen Schlüssels umfasst.

11. Verfahren gemäß einem der Ansprüche 8 bis 10, wobei die geheimen Schlüssel in der zweiten Einrichtung (300) zugeordnet zu einem kryptografisch abgeleitetem Wert einer jeweiligen Schlüsselkennung abgespeichert sind und wobei das Ermitteln eines geheimen Schlüssels basierend auf der empfangenen Schlüsselkennung ein kryptografisches Ableiten eines Werts der empfangenen Schlüsselkennung und ein Ermitteln eines mit Zuordnung zu dem kryptografisch abgeleiteten Wert gespeicherten geheimen Schlüssels umfasst.

12. Vorrichtung (310) umfassend Mittel (311, 312) zur Ausführung des Verfahrens gemäß einem der Ansprüche 8 bis 11.

13. Vorrichtung gemäß Anspruch 12, wobei die Vorrichtung ein Server (310) oder ein Modul (317) für einen Server (310) ist.

14. Programm umfassend:
- Programmanweisungen, wobei die Programmanweisungen bei Ausführung durch einen Prozessor (311) eine Vorrichtung (310) zur Ausführung des Verfahrens gemäß einem der Ansprüche 8 bis 11 veranlassen.

15. System umfassend:
- eine erste Einrichtung (200) mit einer Vorrichtung (210) gemäß Anspruch 5 oder 6 und einem Speicher (214) eingerichtet zum Speichern einer Mehrzahl von einem jeweiligen Nutzer zugeordneten Schlüsselkennungen und/oder
- eine zweite Einrichtung (300) mit einer Vorrichtung (310) gemäß Anspruch 12 oder 13 und einem Speicher (320) eingerichtet zum Speichern einer Mehrzahl von einer jeweiligen Schlüsselkennung zugeordneten geheimen Schlüsseln.

## Claims

1. Method performed by an apparatus (210) of a first installation (200), which stores key identifications with allocation to a respective user, wherein a second installation (300) stores secret keys which each can be found by means of a key identification, the method comprising:
- authenticating a user who logs onto the first installation (200) via a user device (100),
- creating a temporary identifier as a basis for retrieving a secret key held ready for the user in the second installation (300) and allocating the identifier to the user,
- transmitting the identifier to the user device (100),
- receiving a request for a key identification from the second installation (300), wherein the request contains an identifier which was transmitted to the second installation (300) from a user device (100),
- determining a user allocated to the received identifier and determining a key identification stored for the determined user, and
- transmitting the key identification to the second installation (300).

2. Method according to claim 1, further comprising:
- checking a validity of the received identifier, wherein a key identification is only identified and transmitted if the validity of the received identifier is established.

3. Method according to any of claims 1 and 2, wherein the first installation (200) stores encrypted data for the user which can be decrypted in the user device (100) by means of a secret key allocated to the user in the second installation (300), and wherein access to the data in the first installation (200) is enabled for the user after the authentication or after a separate authentication.

4. Method according to claim 3, wherein the encrypted data
- was encrypted by a third party device and made available to the first installation (200) or
- was encrypted by a device of the user and made available to the first installation (200).

5. Apparatus (210) comprising means (211, 212, 213) for performing the method according to any one of claims 1 to 4.

6. Apparatus according to claim 5, wherein the apparatus is a server (210) or a module (217) for a server (210).

7. Program comprising:
- program instructions, wherein the program instructions when executed by a processor (211) cause an apparatus (210) to perform the method according to any one of claims 1 to 4.

8. Method performed by an apparatus (310) of a second installation (300) which stores secret keys which each can be found by means of a key identification, wherein a first installation (200) stores key identifications with allocation to a respective user, the method comprising:
- receiving a request for a secret key from a user device (100) together with a temporary identifier,
- requesting a key identification from the first installation (200), wherein the received identifier is transmitted,
- receiving a key identification from the first installation (200) for a user allocated to the identifier in the first installation (200),
- determining a secret key based on the received key identification and
- transmitting the secret key to the user device (100).

9. Method according to claim 8, wherein the secret keys are stored in the second installation (300) encrypted with the associated key identification, and wherein the secret key determined based on the key identification is a secret key encrypted with the key identification, further comprising:
- decrypting the determined encrypted secret key with the received key identification, wherein the transmission of the secret key to the user device (100) comprises a secure transmission of the decrypted secret key.

10. Method according to claim 9, further comprising for the secure transmission of the decrypted secret key:
- encrypting the decrypted secret key with a one-time password received from the user device (100), the one-time password being encrypted with a public key of a key pair of the second installation (300), wherein the received encrypted one-time password is decrypted with a private key of the key pair of the second installation (300) before it is used for encrypting the secret key of the user, and wherein the transmission of the secret key to the user device (100) comprises a transmission of the secret key encrypted with the one-time password.

11. Method according to any one of claims 8 to 10, wherein the secret keys are stored in the second installation (300) with allocation to a cryptographically derived value of a respective key identification, and wherein determining a secret key based on the received key identification comprises cryptographically deriving a value of the received key identification and determining a secret key which is stored with allocation to the cryptographically derived value.

12. Apparatus (310) comprising means (311, 312) for executing the method according to any one of claims 8 to 11.

13. Apparatus according to claim 12, wherein the apparatus is a server (310) or a module (317) for a server (310).

14. Program comprising:
- program instructions, wherein the program instructions when executed by a processor (311) cause an apparatus (310) to perform the method according to any one of claims 8 to 11.

15. System comprising:
- a first installation (200) comprising an apparatus (210) according to claim 5 or 6 and a memory (214) designed to store a plurality of key identifications allocated to a respective user and/or
- a second installation (300) comprising an apparatus (310) according to claim 12 or 13 and a memory (320) designed to store a plurality of secret keys allocated to a respective key identification.

## Revendications

1. Procédé, exécuté par un dispositif (210) d'une première installation (200), qui mémorise des identifications de clés avec association à un utilisateur respectif, sachant qu'une deuxième installation (300) mémorise des clés secrètes qui peuvent être respectivement retrouvées au moyen d'une identification de clé, le procédé comprenant :
- l'authentification d'un utilisateur, qui entre en communication avec la première installation (200) par l'intermédiaire d'un dispositif d'utilisateur (100),
- la génération d'un identificateur temporaire en tant que base pour l'extraction d'une clé secrète mise à la disposition pour le utilisateur dans la deuxième installation (300) et association de l'identificateur à l'utilisateur,
- la transmission de l'identificateur au dispositif d'utilisateur (100)
- la réception d'une sollicitation d'une identification de clé de la deuxième installation (300), sachant que la sollicitation contient un identificateur, qui a été transmis d'un dispositif d'utilisateur (100) à la deuxième installation (300),
- la détermination d'un utilisateur associé à l'identificateur reçu et la détermination d'une identification de clé mémorisée pour l'utilisateur déterminé, et
- la transmission de l'identification de clé à la deuxième installation (300).

2. Procédé selon la revendication 1 comprenant de plus :
- la vérification de la validité de l'identificateur reçu, sachant qu'une identification de clé ne peut être déterminée et transmise que si la validité de l'identificateur reçu est constatée.

3. Procédé selon l'une des revendications 1 et 2, sachant que la première installation (200) mémorise des données codées pour l'utilisateur, qui peuvent être décodées dans le dispositif d'utilisateur (100) au moyen d'une clé secrète, associée à l'utilisateur dans la deuxième installation (300), et sachant qu'un accès aux données contenues dans la première installation (200) est accordé à l'utilisateur après l'authentification ou après une authentification séparée.

4. Procédé selon la revendication 3, sachant que les données mémorisées
- sont codées par un dispositif d'un tiers et mises à la disposition de la première installation (200), ou
- sont codées par un dispositif de l'utilisateur (100) et mises à la disposition de la première installation (200).

5. Dispositif (210) comprenant des moyens (211, 212, 213) pour l'exécution du procédé selon l'une des revendications 1 à 4.

6. Dispositif selon la revendications 5, sachant que le dispositif est un server (210) ou un module (217) pour un server (210).

7. Programme comprenant :
- des instructions de programme, sachant que les instructions de programme, lors de l'exécution par un processeur (211), incite le dispositif (210) à exécuter le procédé selon l'une des revendications 1 à 4.

8. Procédé, exécuté par un dispositif (310) d'une deuxième installation (300), qui mémorise des clés secrètes qui peuvent être respectivement retrouvées au moyen d'une identification de clé, sachant qu'une première installation (200) mémorise des identifications de clés avec association à un utilisateur respectif, le procédé comprenant :
- la réception d'une sollicitation d'une clé secrète d'un dispositif d'utilisateur (100), en commun avec un identificateur temporaire,
- la sollicitation d'une identification de clé de la première installation (200), sachant que l'identificateur reçu est transmis,
- la réception d'une identification de clé de la première installation (200), pour un utilisateur associé à l'identificateur dans la première installation (200),
- la recherche d'une clé secrète sur la base de l'identification de clé reçue, et
- la transmission de la clé secrète au dispositif d'utilisateur (100).

9. Procédé selon la revendication 8, sachant que les clés secrètes, codées avec l'identification de clé respective, sont mémorisées dans la deuxième installation (300) et sachant que la clé secrète, détectée sur la base de l'identification de clé, est une clé secrète, codée avec l'identification de clé, le procédé comprenant de plus :
- le décodage de la clé secrète, codée, détectée avec l'identification de clé reçue, sachant que la transmission de la clé secrète au dispositif d'utilisateur (100) comprend une transmission sécurisée de la clé secrète, décodée.

10. Procédé selon la revendication 9, comprenant de plus, pour la transmission sécurisée de la clé secrète, décodée :
- le codage de la clé secrète, décodée, avec un mot de passe à usage unique, reçu par le dispositif d'utilisateur (100), lequel mot de passe est codé avec une clé publique d'une paire de clés de la deuxième installation (300), sachant que mot de passe à usage unique codé, reçu, est décodé avec une clé privée de la paire de clés de la deuxième installation (300) avant qu'il soit utilisé pour le codage de la clé secrète de l'utilisateur, et sachant que la transmission de la clé secrète au dispositif d'utilisateur (100) comprend une de la clé secrète, codée avec le mot de passe à usage unique.

11. Procédé selon l'une des revendications 8 à 10, sachant que les clés secrètes sont mémorisées dans la deuxième installation (300) en étant associées à une valeur cryptographique, dérivée d'une identification de clé respective, et sachant que la détermination d'une clé secrète sur la base de l'identification de clé reçue comprend une dérivation cryptographique d'une valeur de l'identification de clé reçue et une détermination clé secrète mémorisée avec association à la valeur cryptographique, dérivée.

12. Dispositif (310) comprenant des moyens (311, 312) pour l'exécution du procédé selon l'une des revendications 8 à 11.

13. Dispositif selon la revendication 12, sachant que le dispositif est un server (310) ou un module (317) pour un server (310).

14. Programme comprenant :
- des instructions de programme, sachant que les instructions de programme, lors de l'exécution par un processeur (311), incite un dispositif (310) à exécuter le procédé selon l'une des revendications 8 à 11.

15. Système comprenant :
- une première installation (200) avec un dispositif (210) selon revendication 5 ou 6 et une mémoire (214) aménagée pour la mémorisation d'une pluralité d'identifications de clés, associées à des utilisateurs respectifs, et / ou
- une deuxième installation (300) avec un dispositif (310) selon revendication 12 ou 13 et une mémoire (320) aménagée pour la mémorisation d'une pluralité de clés secrètes associées à une identification de clé respective.
